# EUROPEAN PATENT SPECIFICATION

(11) **EP 1 306 403 B1**
(45) Date of publication and mention of the grant of the patent: **29.08.2007**
(21) Application number: 02009429.8
(22) Date of filing: 25.04.2002
(51) Int. Cl.: C08J 9/32, C08J 5/18, B32B 27/18, F24J 2/50

(54) **Transparent film with hollow glass microspheres for agriculture**
Durchsichtige Folie mit Mikrohohlkugeln aus Glas für die Landwirtschaft
Film transparent pour l'agriculture contenant des microsphères de verre creuses

(30) Priority: 25.10.2001 IT PD20010254
(43) Date of publication of application: 02.05.2003
(73) Proprietor: Agriplast S.r.l., 97019 Vittoria (IT)
(72) Inventor: Cascone, Marco, 97019 Vittoria (IT)
(74) Representative: Gustorf, Gerhard

(56) References cited:
- EP-A- 0 491 504
- EP-A- 0 536 917
- FR-A- 2 334 708
- US-A- 5 866 246

## Description

The invention concerns a transparent film including a given percentage of hollow glass microspheres, suitable for use in agriculture, especially as greenhouse covering. The invention includes also the relevant production method.

The traditional coverings for greenhouses, either for standard and tunnel greenhouses, can be substantially divided into rigid or flexible coverings. The former are constituted by glass, polyester reinforced with fibreglass, corrugated rigid PVC, polymethyl methacrylate or polycarbonate and are used in thicknesses of several millimetres. The latter are constituted by plastified PVC, EVA copolymer, low-density PE, Ethylene-Tetrafluoroethylene, polyurethane, polypropylene and are used in thicknesses of tenths of millimetre.

In any case, the characteristics required of these products are the following:
- mechanical resistance, including the resistance to stress due to weather agents and bad weather conditions, so that the covering can properly protect the underlying crops;
- transmission of sun radiation light, in particular of P.A.R. radiations (Photosynthetic Active Radiations);
- greenhouse effect, that is, capacity to transmit or filtrate radiation bands in the infrared field (7,000-13,000 nm);
- the film must be durable over time, in particular it must resist to sun radiations that modify its molecular structure.

Flexible films are less expensive than rigid elements, require less complex supporting structures and are simpler to apply.

The choice of the covering material to be applied is very important, since different, sometimes conflicting needs must be taken in consideration. For example, mechanical resistance may be increased by increasing the thickness of the film, but this reduces light transmission.

The state of the art includes a film made of LDPE, EVA/C, PP with the addition of the so-called «mineral fillers», generally silicates or silico-aluminates, which through the refraction or diffraction of sun rays prevent or limit direct radiation on plants, thus avoiding any burns. In any case, these salts weaken the film structure and, with equal thickness, reduce its mechanical resistance.

The state of the art includes also a layer with a polymeric material base, containing bubbles of dispersed gas. On the average the mechanical resistance of this layer is lower than that of the corresponding films produced with the same base polymer and the same base specific weight. Furthermore, the high absorption of sun radiation in the short infrared field reduces the penetration of direct light inside the greenhouse, and this is sometimes incompatible with the needs of some specific cultivations. The same is valid also for the nearly total absorbance in the UV field.

The state of the art includes also a multilayer film with different materials in the different layers, aimed at increasing mechanical resistance; in any case, this usually decreases light transmittance.

The state of the art also includes patent WO-A-94/05727, according to which solid particles, for example mica particles, which are capable of selectively reflect sunlight, are included in the film. However, these particles present the drawback that they weaken the film, since the polymeric matrix is interrupted and this facilitates the migration of the chemical products used for the cultivation inside the film, which therefore tends to deteriorate very quickly.

FR-A 2 334 708 discloses a polyethylene film for use as greenhouse covering having a modified transparency due to the incorporation of glass microspheres which have a homogeneous repartition. Obviously, said glass microspheres are not hollow.

EP-A 536 917 relates to a high opacity film structure of improved whiteness used for packaging snack foods or the like. Said film is provided with a plurality of voids each of which may be occupied by a hollow preformed glass sphere.

The state of the art also includes mechanical operations on at least one of the two surfaces of the film, carried out with curling or embossing processes or other systems that modify its regular surface by passing it under special calenders. These mechanical operations require very expensive equipment and in any case the maximum width reaches 4-5 metres, while in agricultural applications widths of at least 14 metres are usually required.

The film object of the invention and its production method are described in the main claims, while the successive claims describe further innovative characteristics of the invention.

One of the aims of the invention is the implementation of a flexible film, wherein it should be possible to adjust the spectrophotometric characteristics and the effects of light diffusion without a sensible decrease in the total transmittance of the film, which instead should maintain mechanical characteristics very similar to those of the base polymer or polymers and ensure an almost total "greenhouse effect" of the film, due to the sum of the intrinsic effect of the polymer with the "double glazing" effect of the hollow glass microspheres.

In accordance with this aim, the film object of the invention is produced by combining and mixing one or more homegenous or heterogeneous polymers, having molecular structures that may present affinity or not from the molecular point of view, but are amalgamable from the rheological point of view and variable concentrations of hollow glass microspheres, ranging from 1 to 99%.

In accordance with another characteristic of the invention, using appropriate conditions of bubble film extrusion and production, with the traditional techniques it is possible to obtain a multilayer film where light transmittance is not uniform and can vary within casual shapes and dimensional areas, due to the effect of the different refraction indices, which depend on the relationship between the thickness of two or more polymers and the relevant hollow glass microspheres.

Binary polymer blends, to which various additives are usually added, such as anti-adhesive, anti-static, anti-drip additives, UV-stabilizers, are constituted by percentages of polymer A ranging from 10 to 90%, preferably from 20 to 80%, and percentages of polymer B ranging from 90 to 10%, preferably from 80 to 20%.

The melting temperatures of polymers A and B must be different, but this difference must be preferably included between 5 and 50°K, or better between 10 and 40°K.

According to another characteristic of the invention, the films object of the invention can be produced in blowing extrusion systems with mono or co-extrusion, without particular modifications and equipped in such a way as to adjust with suitable flexibility the process conditions, the screw rotation speed and the temperatures, in order to be suitable for the characteristics of the formula (compound) of the polymers chosen.

These and other characteristics of the invention will be described in greater detail in the following description of one among many possible systems for the production of the film according to the invention, illustrated in the enclosed drawings that show a schematic view of the system.

The description "system for the production of a film according to the invention" means a conventional blowing extrusion system.

The proportioning system for mixing the various components can be gravimetric or volumetric, in any case suitable for proportioning the required components from 10 to 90% of one type with respect to the other, for the granules of both polymers A and B, including also the relevant additives and the hollow glass microspheres. The proportioning device must be suitable for supplying also a third polymer C or other polymers N. The granules of the base polymers and of the masterbatch compounds containing the additives can undergo partial pre-mixing into a hopper suitable for feeding the feeding section of the extruder.

If the co-extrusion method is used, feeding will be proportional for each line. In a typical example, in the feeding section of the extruder the extrusion temperature must be near the melting point of the polymer that has the lowest melting point. In this area the granules start to melt and the material is compressed and pushed through a screw that is not visible in the drawing and is located inside the extruder.

The temperature is gradually modified by means of automatized controls, section by section, through thermocouple sensors connected to heat regulators by means of a control unit, for example a PLC, and to electric resistors that heat the various sections of the extruder. Centrifugal fans are provided to cool the extruder.

The choice of the temperature of each sector of the extruder is defined according to the friction ratio between the cylinder and the inner screw and to the rheological curves of the polymers used.

In this way the molten material reaches the correct fluidity, passes through the head of the extruder and comes out taking a tubular shape; the diameter and the thickness of the resulting tube are adjusted through the injection of air inside the tube and depend also on the extrusion speed.

The tube is cooled at the base by tangential air and proceeds towards the cooling tower; then, it is bent and air is blown inside it before it reaches the driving rollers that are positioned at the top of the system and complete the crushing of the tube, which is then conveyed downwards, towards the winder.

Here below are some examples of polymer combinations, starting from base polymers and from the following heterogeneous pairs: LDPE and PP; PP and EVA/C; PVC and EVA/C; PU and LDPE; PU and EVA/C, EVA/C and polyamide, from which it is possible to obtain the following combinations with three polymers: LDPE, PP and EVA/C; PP, EVA/C and PVC.

Obviously, modifications and additions can be made to produce the film according to the invention, but these are all included in the innovative concepts described herein and are therefore protected by this patent.

## Claims

1. Transparent film suitable for use as greenhouse covering, constituted by one or more homogeneous polymers or two heterogeneous polymers having different molecular structures which are not reactive to each other from a molecular point of view, but can be bonded due to their rheological characteristics, **characterized in that** said polymers, in the amorphous phase, include a quantity of hollow glass microspheres positioned at random in said film, wherein:
a. the variable concentration of said hollow glass microspheres ranges from 1 % to 99 %,
b. the density of said hollow glass microspheres vary from 0,125 to 0,60 g/cm³, with a density interval from 0,10 to 0,63 g/cm³ and an apparent density from 0,05 to 0,43 g/cm³,
c. said film is a multilayer film made up of a first layer which, during the extrusion phase, is combined to at least a second layer,
d. said films including said hollow glass microspheres are produced with a thickness between 10 and 1000 µm.

2. Transparent film according claim 1, wherein the greenhouse effect characteristics, calculated in the medium-long infrared field between 7.000 and 13.000 nm are at least 3 % higher than those of the same film without microspheres.

3. Transparent film according claim 1 or 2, wherein, due to the characteristics of transmittance of visible radiations, said film does not have light diffusion values more than 3 % higher than those of the same film without microspheres.

4. Method for producing a transparent film according to any of the preceding claims, **characterized by** a one-step process of blowing extrusion.

## Patentansprüche

1. Transparente Folie für den Einsatz als Gewächshaus-Abdeckung, bestehend aus einem oder mehr homogenen Polymeren oder aus zwei heterogenen Polymeren mit unterschiedlichen Molekularstrukturen, die vom molekularen Gesichtspunkt nicht miteinander reagieren, jedoch aufgrund ihrer rheologischen Eigenschaften aneinander gebunden werden können, **dadurch gekennzeichnet, daß** die Polymere in der amorphen Phase einen Anteil hohler Mikroglaskugeln haben, die in der Folie regellos angeordnet sind, wobei:
a. die variable Konzentration der hohlen Mikroglaskugeln zwischen 1% und 99% liegt,
b. die Dichte der hohlen Mikroglaskugeln zwischen 0,125 und 0,60 g/cm³ variiert und das Dichteintervall zwischen 0,10 und 0,63 g/m³ und die Stoffdichte zwischen 0,05 und 0,43 g/cm³ liegen,
c. die Folie eine mehrschichtige Folie mit einer ersten Folie ist, die während der Extrusionsphase mit wenigstens einer zweiten Folie verbunden wird,
d. die Folien einschließlich der hohlen Mikroglaskugeln in einer Stärke zwischen 10 und 1000 µm hergestellt sind.

2. Transparente Folie nach Anspruch 1, **dadurch gekennzeichnet, daß** die Gewächshaus-Eigenschaften, berechnet in einem mittel- bis langwelligen Infrarot-Bereich zwischen 7000 und 13000 nm, wenigstens 3% höher als bei der gleichen Folie ohne Mikroglaskugeln sind.

3. Transparente Folie nach Anspruch 1 oder 2, **dadurch gekennzeichnet, daß** aufgrund der Eigenschaften der Durchlässigkeit von sichtbaren Strahlen die Folie keine Lichtdiffusionswerte hat, die mehr als 3% höher sind als bei der gleichen Folie ohne Mikroglaskugeln.

4. Verfahren zur Herstellung einer transparenten Folie nach einem der vorhergehenden Ansprüche, **gekennzeichnet durch** eine einstufige Blasextrusion.

## Revendications

1. Feuille transparente à utiliser pour le recouvrement de serre, comprenant un ou plusieurs polymères homogènes ou deux polymères hétérogènes de structures moléculaires différentes qui, du point de vue moléculaire, ne réagissent pas entre elles, mais qui en raison de leurs caractéristiques rhéologiques peuvent se combiner, **caractérisée par le fait que** les polymères ont dans la phase amorphe une forte proportion de microbilles de verre creuses réparties au hasard dans la feuille, ceci étant :
a. la concentration variable des microbilles de verre se situe entre 1% et 99%,
b. la densité des microbilles creuses varie entre 0,125 et 0,60 g/cm3, et l'intervalle de densité se situe entre 0,10 et 0,63 g/cm3 et la densité apparente entre 0,05 et 0,43 g/cm3,
c. la feuille est une feuille à plusieurs couches avec une première couche qui, durant la phase d'extrusion, est combinée avec au moins une deuxième feuille,
d. les feuilles, les microbilles de verre inclues, sont fabriquées dans une épaisseur allant de 10 à 1000 µm.

2. Feuille transparente selon la revendication 1, **caractérisée par le fait que** les caractéristiques de la serre, calculées dans une gamme d'infrarouges de moyenne à grande longueur d'onde entre 7000 et 13000 nm, sont au moins 3% plus élevées que pour une feuille semblable sans microbilles de verre.

3. Feuille transparente selon les revendications 1 ou 2, **caractérisée par le fait que**, en raison de ses caractéristiques de translucidité aux rayons visibles, la feuille n'a pas de valeurs de diffusion lumineuse qui seraient de plus de 3% plus élevées que pour la feuille semblable sans microbilles de verre.

4. Procédé pour la fabrication d'une feuille transparente selon une des revendications précédentes, **caractérisé par** une extrusion soufflée à un seul étage.
